# EUROPEAN PATENT SPECIFICATION

(11) **EP 4 438 418 B1**
(45) Date of publication and mention of the grant of the patent: **10.06.2026**
(21) Application number: 23165626.5
(22) Date of filing: 30.03.2023
(51) Int. Cl.: B60R 21/231, B60R 21/237, B60R 21/21

(54) **SIDE AIR-BAG**
SEITENAIRBAG
AIRBAG LATÉRAL

(43) Date of publication of application: 02.10.2024
(73) Proprietor: Autoliv Development AB, 447 83 Vårgårda (SE)
(72) Inventor: Kreft-Lazarska, Kamila, 85221 Dachau (DE); Schuler, Harald, 85221 Dachau (DE); Siefkes, Richard, 85221 Dachau (DE)
(74) Representative: Forresters IP LLP

(56) References cited:
- EP-B1- 0 988 185
- US-A1- 2012 013 107
- US-A1- 2016 368 449
- US-A1- 2021 094 502
- US-A1- 2022 355 756

## Description

### FIELD

The present invention relates to a side air-bag for a motor vehicle. The present invention more particularly relates to a side air-bag to protect an occupant of a vehicle in the event of a crash situation.

### BACKGROUND

A side air-bag is a type of safety device that is mounted within a vehicle to protect an occupant of the vehicle in the event of a crash situation. A side air-bag is particularly beneficial in protecting an occupant of a vehicle in the event that the vehicle is involved in a side impact.

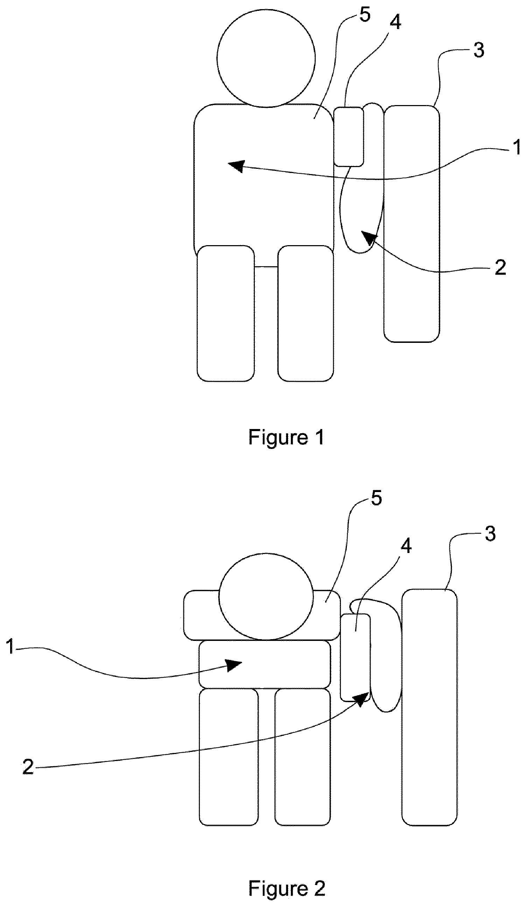

Figure 1 of the accompanying drawings shows a front view of an occupant 1 of a vehicle and a conventional side air-bag 2 in an inflated configuration, after having been deployed. Figure 2 shows a top view of the occupant 1 and the air-bag 2 of Figure 1. The inflated air-bag 2 is positioned between a door 3 of the vehicle and the occupant 1. The air-bag 2 acts as a cushion that restricts movement of the occupant 1 relative to the door 3. The air-bag 2 dissipates kinetic energy of the occupant 1 to minimise the risk of the occupant 1 striking the door 3 and being injured during the crash situation.

A problem with side air-bags, such as the air-bag 2 shown in Figures 1 and 2, is that the air-bag 2 typically does not contact the torso of the occupant 1 sufficiently. This can lead to high forces being exerted by the inflated air-bag 2 on an arm 4 and/or a shoulder 5 of the occupant 1, which can in turn cause injury to the arm 4 or shoulder 5. The conventional air-bag 2 can also lead to injury of the ribs of the occupant 1 due to the air-bag 2 transmitting a force that pushes the arm 4 of the occupant 1 against the ribs of the occupant 1.

There is a need for an improved side air-bag that alleviates at least some of the problems outlined herein.

US 2012/0013107 discloses an inflatable airbag assembly. US2021/094502A1, which is considered the closest prior art document, discloses a side air-bag for a motor vehicle, the air-bag comprising: a first layer of fabric; and a second layer of fabric, the second layer of fabric being superimposed on the first layer of fabric to form a chamber between a section of the first layer of fabric and a section of the second layer of fabric, the air-bag being configured to transition between a first configuration and a second configuration upon inflation of the air-bag, wherein: in the first configuration, the first layer of fabric is folded with at least one first elongate pleat which is formed from a first fold and a second fold in the first layer of fabric and the second layer of fabric is folded with at least one second elongate pleat which is formed from a first fold and a second fold in the second layer of fabric and the chamber is at a first volume; and in the second configuration, each pleat in the first and second layers of fabric is unfolded to allow the chamber to expand to a second volume, wherein the second volume is greater than the first volume, such that upon inflation of the air-bag within a vehicle, the air-bag transitions between the first configuration and the second configuration to at least partly fill a space adjacent to the torso of an occupant of the vehicle.

### BRIEF DESCRIPTION OF THE INVENTION

The present invention provides a side air-bag as claimed in claim 1 and a side air-bag module as claimed in claim 9. The present invention also provides preferred embodiments as claimed in the dependent claims.

The air-bag of some examples of this disclosure fills the space between the door of a vehicle and the torso of an occupant of the vehicle fully, thereby stabilising and minimising movement of the occupant of the vehicle during a crash situation.

The air-bag of some examples of this disclosure rotates the arm of an occupant during deployment which leads to more inboard positioning of the inflated air-bag relative to a conventional side air-bag. This further inboard positioning further enhances the protection to the vehicle occupant as compared with a conventional side air-bag.

The air-bag of some examples of this disclosure can be configured easily to inflate in a desired manner for a particular vehicle type by changing the number of pleats and/or the position of the pleats in the air-bag. Such flexibility is not possible with standard conventional side air-bags that are not folded with pleats.

The air-bag of some examples of this disclosure is provided with at least one pleat that unfolds as the air-bag inflates to increase the volume of the air-bag and fully fill the space on one side of an occupant of a vehicle.

The air-bag of some examples of this disclosure avoids the need to add additional fabric and seams to increase the volume of the air-bag, which would otherwise increase the weight and packing size of the air-bag.

### BRIEF DESCRIPTION OF THE FIGURES

In order that the present disclosure may be more readily understood, preferable embodiments thereof will now be described, by way of example only, with reference to the accompanying drawings, in which:
FIGURE 1 is a diagrammatic front view of a conventional side air-bag inflated within a vehicle;
FIGURE 2 is a diagrammatic top view of the conventional side air-bag shown in Figure 1;
FIGURE 3 is a diagrammatic side view of an air-bag of an example of this disclosure;
FIGURE 4 is a further diagrammatic side view of the air-bag of Figure 3;
FIGURE 5 is a further diagrammatic side view of the air-bag of Figure 3;
FIGURE 6 is a diagrammatic top cross-sectional view along an axis A-A of the air-bag shown in Figure 5;
FIGURE 7 is a diagrammatic side view of the air-bag of Figure 3 at an intermediate stage of manufacture;
FIGURE 8 is a diagrammatic top cross-sectional view of the air-bag of Figure 3 after the air-bag has been inflated;
FIGURE 9 is a diagrammatic perspective view of the air-bag of Figure 3 after the air-bag has been inflated;
FIGURE 10 is a diagrammatic front view of the air-bag of Figure 3 after having been inflated within a vehicle;
FIGURE 11 is a diagrammatic top view of the air-bag of Figure 3 after having been inflated within a vehicle;
FIGURE 12 is a diagrammatic perspective view of the air-bag of Figure 3 at an intermediate stage of inflation of the air-bag in a vehicle;
FIGURE 13 is a diagrammatic front view corresponding to Figure 12;
FIGURE 14 is a diagrammatic perspective view of the air-bag of Figure 3 at a later stage of inflation of the air-bag in a vehicle;
FIGURE 15 is a diagrammatic front view corresponding to Figure 14;
FIGURE 16 is a diagrammatic perspective view of the air-bag of Figure 3 fully inflated in a vehicle; and
FIGURE 17 is a diagrammatic front view corresponding to Figure 16;

### DETAILED DESCRIPTION OF THE DISCLOSURE

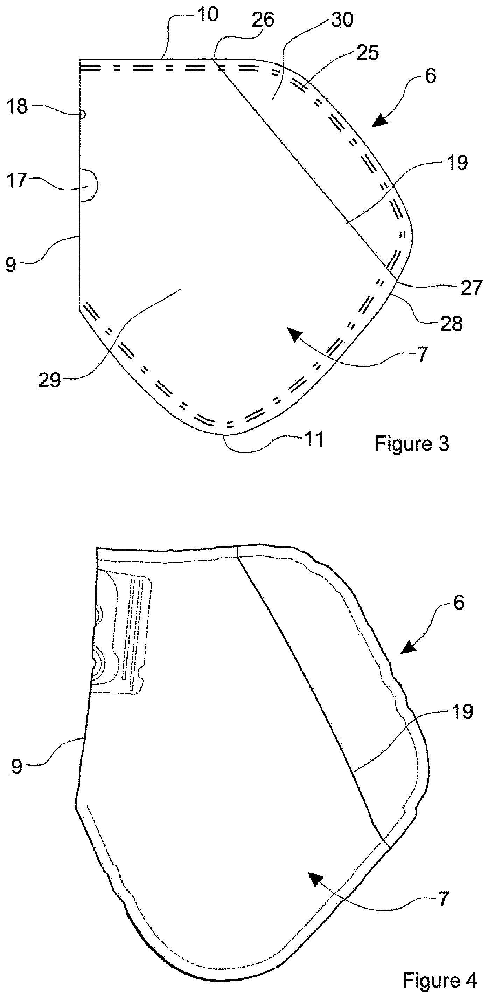

Referring now to Figures 3 to 7 of the accompanying drawings, a side air-bag 6 of an example of this disclosure comprises a first layer of fabric 7 and a second layer of fabric 8. In this example, the first and second layers of fabric 7, 8 are formed integrally with one another and folded along an axis of a fold line 9 so that the layers of fabric 7, 8 are superimposed on one another. However, in other examples, the first and second layers of fabric 7, 8 are initially separate but joined to on another during the manufacturing process.

The first and second layers of fabric 7, 8 are elongate in the sense that the first and second layers of fabric 7, 8 have a length which extends between a first end 10 and a second end 11 of the first layer of fabric 7 or between a first end 12 and a second end 13 of the second layer of fabric 8. In normal use, the first ends 10, 12 are positioned at the top of the air-bag 6 and the second ends 11, 13 are positioned at the bottom of the air-bag 6 when the air-bag 6 is inflated within a vehicle.

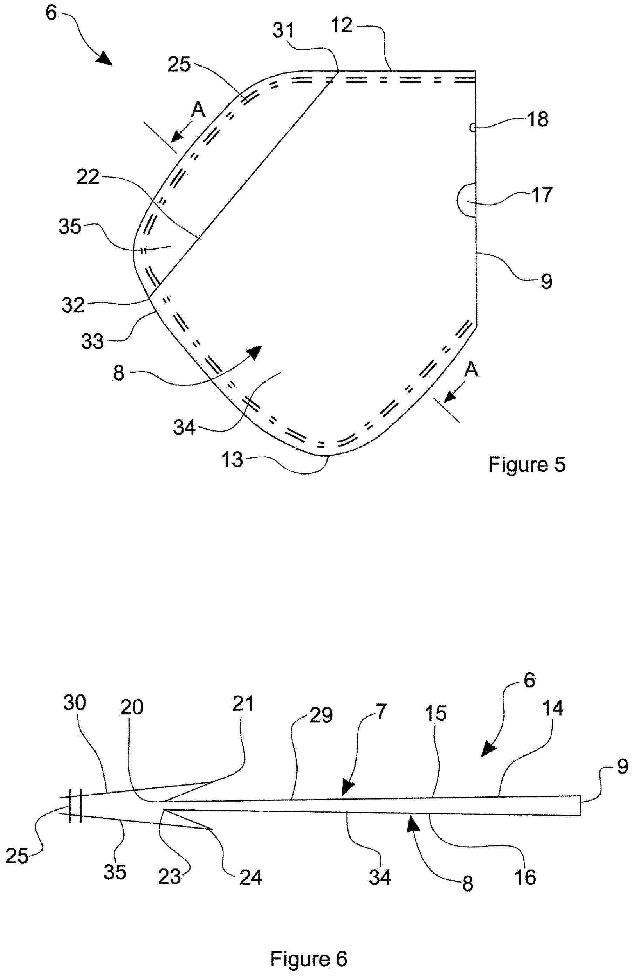

The second layer of fabric 8 is superimposed on the first layer of fabric 7 to form a chamber 14 between a section 15 of the first layer of fabric 7 and a section 16 of the second layer of fabric 8, as shown in Figure 6 of the accompanying drawings.

The air-bag 6 is provided with a gas inlet aperture 17 which, in this example, is positioned at the fold line 9 between the first and second layers of fabric 7, 8. In this example, the air-bag 6 is provided with a mounting aperture 18 in the vicinity of the gas inlet aperture 17 to receive a mounting element to mount a gas generator to the air-bag 6. However, in other examples, the mounting aperture 18 is omitted.

The first layer of fabric 7 is folded with at least one first elongate pleat 19. In this example, the first elongate pleat 19 is formed from a first fold 20 and a second fold 21, which together form a Z-fold in the first layer of fabric 7. In other examples of this disclosure the first layer of fabric 7 is folded with at least one first elongate pleat having a fold shape that is different from a Z-fold.

The second layer of fabric 8 is folded with at least one second elongate pleat 22. In this example, the second elongate pleat 22 is formed from a first fold 23 and a second fold 24, which together form a Z-fold in the second layer of fabric 8. In other examples of this disclosure the second layer of fabric 8 is folded with at least one second elongate pleat having a fold shape that is different from a Z-fold.

The first and second elongate pleats 19, 22 reduce the overall width of the first and second layers of fabric 7, 8 so that the first and second layers of fabric 7, 8 are the same or similar width to one another, as shown in Figures 3 and 4. Therefore, when the first and second elongate pleats 19, 22 are folded, the first layer of fabric 7 sits generally flat when superimposed on the second layer of fabric 8.

During manufacture of the air-bag 6, the first and second layers of fabric 7, 8 are superimposed on one another and the first and second layers of fabric 7, 8 are stitched together along a seam 25 that extends at least partly around periphery of the first layer of fabric 7 and the second layer of fabric 8. The seam 25 provides a gas tight or substantially gas tight seal that minimises or prevents gas from leaking out from the air-bag 6 upon inflation.

In this example, the first elongate pleat 19 has a first end 26 and a second end 27. The first end 26 of the first elongate pleat 19 is positioned at the first end 10 of the first layer of fabric 7. The second end 27 of the first elongate pleat 19 intersects with an outer edge 28 of the first layer of fabric 7 which is remote from the fold line 9. The first elongate pleat 19 is at an oblique angle relative to the axis of the fold line 9. The first elongate pleat 19 extends across part of the width of the first layer of fabric 7 and divides the first layer of fabric 7 into a first area 29 and a second area 30, with the first area 29 being larger than the second area 30.

In this example, the second elongate pleat 22 has a first end 31 and a second end 32. The first end 31 of the second elongate pleat 22 is positioned at the first end 12 of the second layer of fabric 8. The second end 32 of the second elongate pleat 22 intersects with an outer edge 33 of the second layer of fabric 8 which is remote from the fold line 9. The second elongate pleat 22 is at an oblique angle relative to the axis of the fold line 9. The second elongate pleat 22 extends across part of the width of the second layer of fabric 8 and divides the second layer of fabric 7 into a first area 34 and a second area 35, with the first area 34 being larger than the second area 35.

In this example, the first layer of fabric 7 and the second layer of fabric 8 are substantially symmetrical or symmetrical in shape about the axis of the fold line 9. In this example, the first and second elongate pleats 19, 22 are positioned symmetrically about the axis of the fold line 9.

When the first layer of fabric 7 is folded with the first elongate pleat 19 and the second layer of fabric 8 is folded with the second elongate pleat 22, the chamber 14 is at a first volume and the air-bag 6 is in a first configuration. The air-bag 6 is in the first configuration when the air-bag 6 is not inflated, for instance when the air-bag 6 is folded and packed within an enclosure.

As will be described in more detail below, the first and second elongate pleats 19, 22 enable a second portion of the air-bag 6 to expand to a greater width than a first portion of the air-bag 6 as the air-bag 6 inflates and transitions between the first configuration and a second configuration. The first portion of the air-bag 6 is formed at least partly by the first area 29 of the first layer of fabric 7 and the first area 34 of the second layer of fabric 8. The second portion of the air-bag 6 is formed at least partly by the second area 30 of the first layer of fabric 7 and the second area 35 of the second layer of fabric 8.

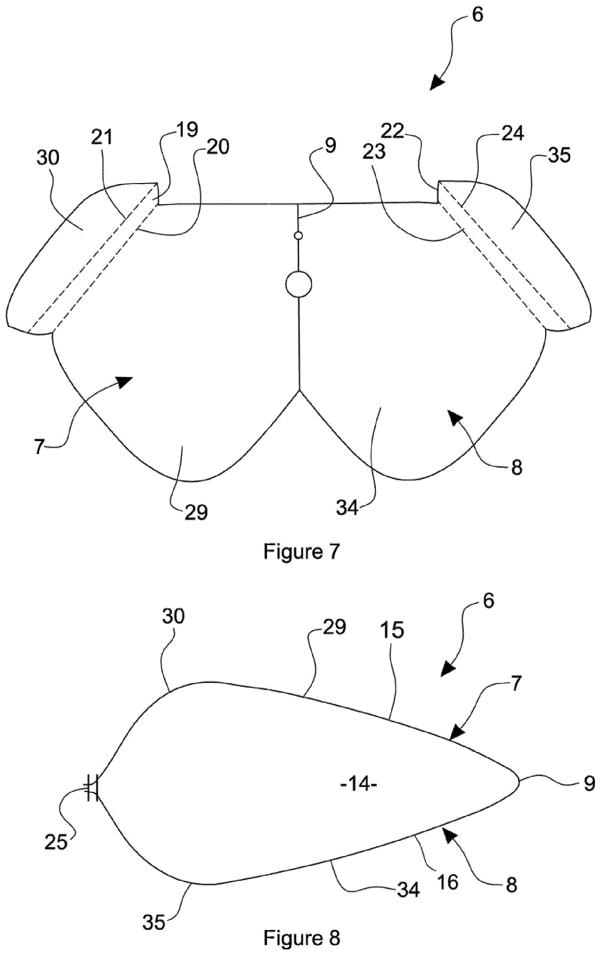

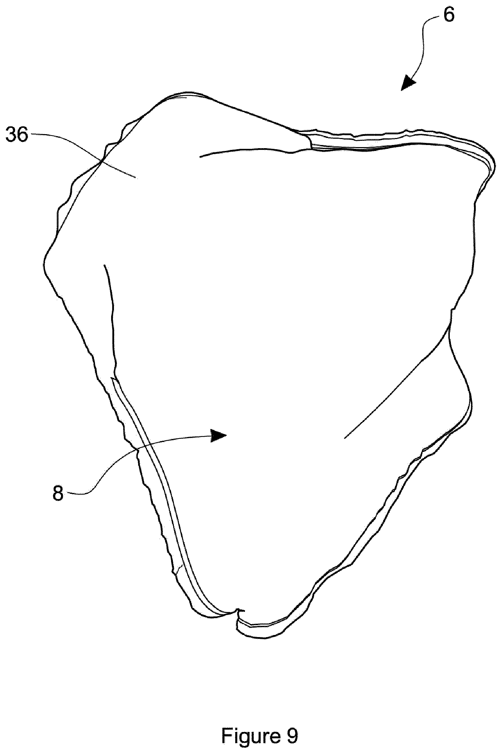

Referring now to Figures 8 to 11 of the accompanying drawings, when a gas is introduced into the chamber 14 to inflate the air-bag 6, forces exerted by the gas on the first and second layers of fabric 7, 8 move the section 15 of the first layer of fabric 7 apart from the section 16 of the second layer of fabric 8. The forces exerted by the gas on the first and second layers of fabric 7, 8 unfold the first and second elongate pleats 19, 22 to allow the chamber 14 to expand to a second volume which is greater than the first volume to cause the air-bag 6 to transition from the first configuration to the second configuration.

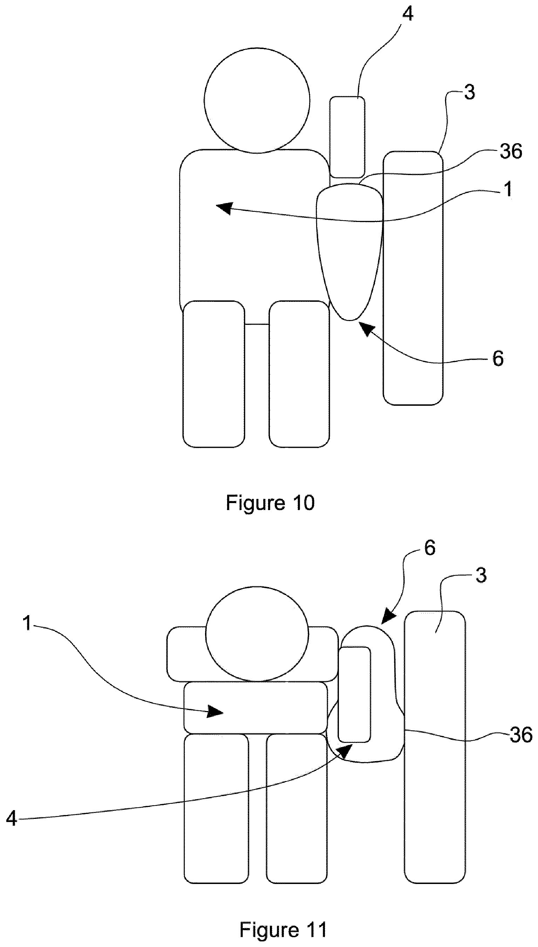

During the transition between the first configuration and the second configuration as the air-bag 6 inflates, the air-bag 6 expands to at least partly fill a space adjacent to the torso of the occupant 1, as shown in Figure 10 and 11. As the air-bag 6 inflates and the pleats 19, 22 unfold, the second portion of the air-bag 6 expands to present an activation surface 36 which exerts a biassing force on the underside of the arm 4 of the occupant 1. The biassing force rotates and lifts the arm 4 of the occupant 1 and the air-bag 6 inflates to fill the space adjacent the torso of the occupant 1. Once the arm 4 of the occupant 1 has been lifted, the air-bag is free to contact the torso of the occupant 1 and provide a cushion between the torso of the occupant and the door 3 of the vehicle. In this example, the inflated air-bag 6 is positioned symmetrically beneath the arm 4 of the occupant 1. The inflated air-bag 6 therefore has improved inboard positioning compared with a conventional side air-bag. The lifting effect on the arm 4 of the occupant 1, due at least partly to the increased width of the air-bag arising from the unfolding pleats 19, 22, minimises the risk of injury to the ribs and shoulder 5 of the occupant 1. The lifting effect moves the arm 4 of the occupant 1 out of the way so that the arm 4 is not pressed against the ribs of the occupant 1 by the inflated air-bag 6 due to forces arising during a crash situation. This also minimises transverse forces exerted on the arm 4 of the occupant 1 by the inflated air-bag 6 during a crash situation that might strain and injure the shoulder 5 of the occupant 1. The arm 4 of the occupant 1 is instead moved out of the way by the inflating air-bag 6 to enable the air-bag 6 to contact the torso of the occupant 1. The expansion of the air-bag 6 from the first volume to the second, greater, volume ensures that the air-bag 6 fills the space between the torso of the occupant 1 and the door 3 of the vehicle. This provides improved stabilisation that minimises movement of the occupant 1 relative to the door 3 and helps minimise injury to the occupant 1 during a crash situation.

In this example, when the air-bag 6 is fully inflated a first, or top, end of the air-bag 6 has a greater thickness than a second, or bottom, end of the air-bag 6 due to the unfolded pleats 19, 22 being positioned closer to the first, or top, end than the second, or bottom, end of the air-bag 6. The greater thickness of the first, or top, end of the air-bag 6 is appropriate to fill the space between the torso of the occupant 1 and the door 3 of the vehicle, as shown in Figure 10. The narrower thickness second, or bottom, end of the air-bag 6 is appropriate to fill the smaller space between the leg of the occupant 1 and the door 3, which further stabilises the air-bag in position between the occupant 1 and the door 3.

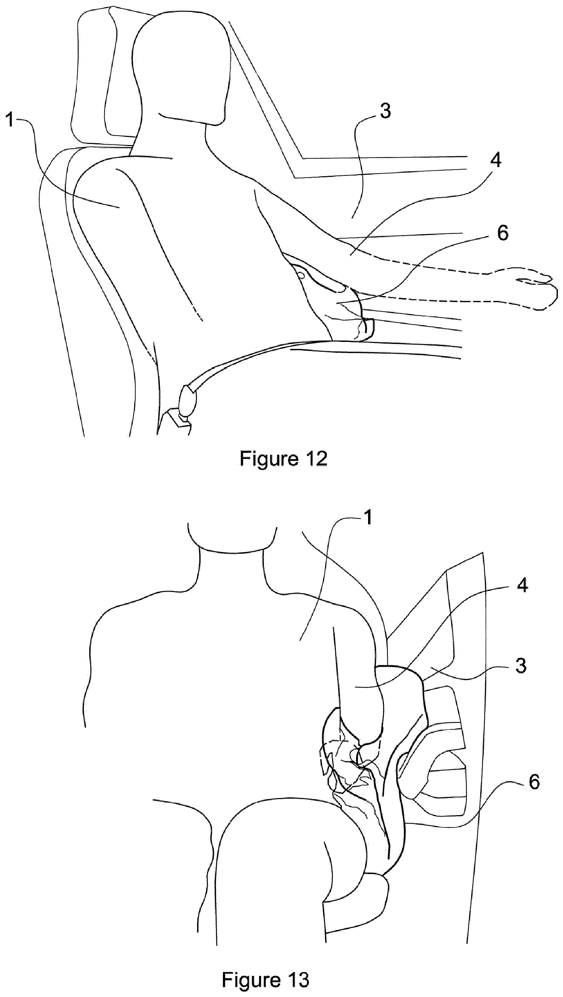

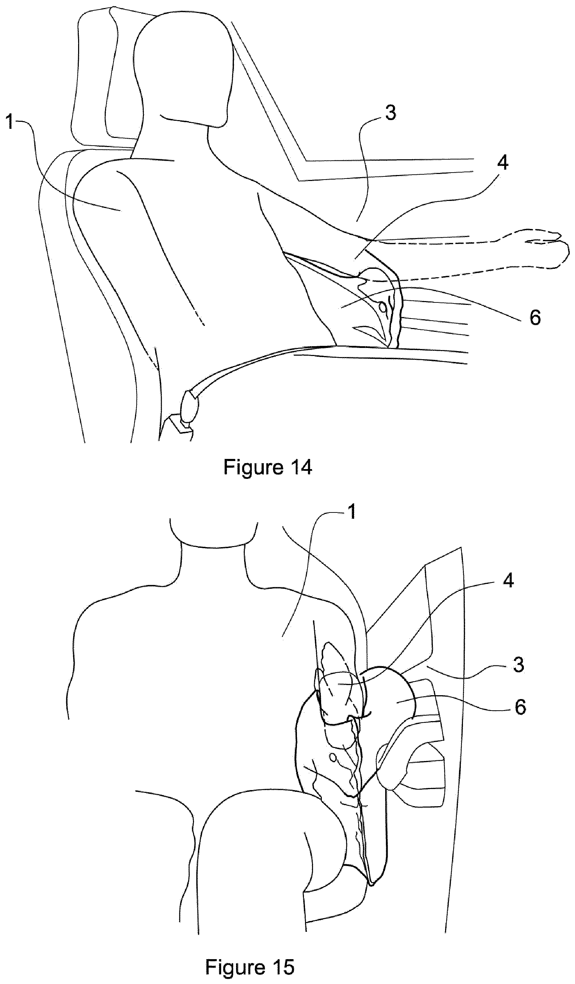

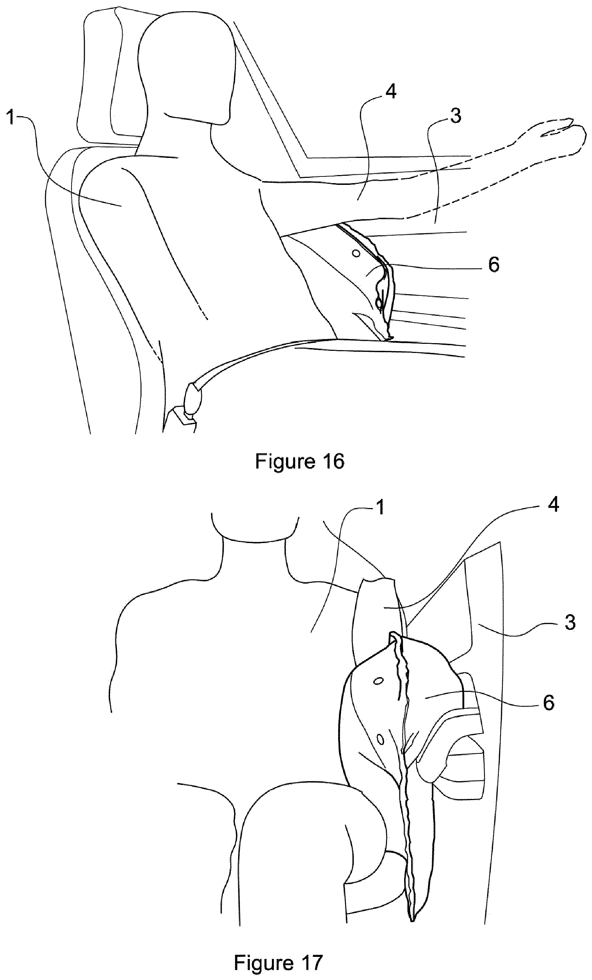

Referring now to Figures 12-17 of the accompanying drawings, the effect of the air-bag 6 rotating and lifting the arm 4 of the occupant 1 as the air-bag 6 inflates is shown at 10.33 ms (Figures 12 and 13), 13.00 ms (Figures 14 and 15) and 24.67 ms (Figures 16 and 17) from the time at which inflation of the air-bag 6 commences. Once the air-bag 6 has been fully inflated, as shown in Figures 16 and 17, the arm 4 of the occupant 1 has been rotated by around 90 degrees and the inflated air-bag 6 fills the space between the torso of the occupant 1 and the door 3 of the vehicle.

In the examples described above, there is one first elongate pleat 19 and one second elongate pleat 22. However, in other examples of this disclosure, at least one of the first layer of fabric 7 and the second layer of fabric 8 are provided with a plurality of spaced apart elongate pleats. The number of pleats may be selected to achieve a desired shape of the air-bag upon inflation to provide an appropriate restraint for an occupant of a vehicle.

While the air-bags of the examples described above are nearside air-bags, to be inflated between an occupant of a vehicle and the door or side wall of a vehicle, an air-bag of another example of this disclosure is a farside air-bag to be inflated centrally within a vehicle between two seats. The farside air-bag is of the same configuration and comprises the same elements as the other air-bags described above to ensure that the air-bag lifts the arms of occupants on one or both sides of the air-bag. The farside air-bag contacts the torso of occupants seated on either side of the air-bag to reduce the risk of injury as a result of the occupants striking one another during a crash situation.

In another example of this disclosure, an air-bag of the type described above comprises an insert or gas diffuser that is coupled to the air-bag adjacent to the gas inlet opening 17. The insert is configured to be mounted to a gas generator.

In a further example of this disclosure, a side air-bag module comprises an enclosure, a gas generator and an air-bag of one of the examples described above. The gas generator is mounted to an insert that is coupled to the air-bag and the air-bag is folded and received within the enclosure. In some examples, the enclosure is a flexible wrap but in other examples the enclosure is a rigid plastic housing.

The configuration of the air-bag with at least one first pleat and at least one second pleat reduces the packing space required for the air-bag compared with a conventional air-bag that incorporates additional fabric to enlarge the volume of the inflated air-bag. Providing additional fabric to enlarge an air-bag also typically requires there to be additional seams, which further enlarge the packing size of the air-bag. Removing the need for such additional fabric and additional seams helps minimise the packing size and hence minimise the overall size of the enclosure of the air-bag module. Furthermore, it is easier to manufacture the air-bag of examples of this disclosure with the pleats compared with other air-bags that require additional fabric to be sewn to the main body of the air-bag to enlarge the volume of the air-bag.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A side air-bag for a motor vehicle, the air-bag comprising:
a first layer of fabric (7); and
a second layer of fabric (8), the second layer of fabric (8) being superimposed on the first layer of fabric (7) to form a chamber (14) between a section (15) of the first layer of fabric (7) and a section (16) of the second layer of fabric (8), wherein the first layer of fabric (7) and the second layer of fabric (8) are formed integrally with one another and folded to superimpose the first layer of fabric (7) on the second layer of fabric (8), and wherein the first layer of fabric (7) is stitched to the second layer of fabric (8) along a seam (25) which extends at least partly around the periphery of the first layer of fabric (7) and the second layer of fabric (8), the air-bag (6) being configured to transition between a first configuration and a second configuration upon inflation of the air-bag (6), wherein:
in the first configuration, the first layer of fabric (7) is folded with at least one first elongate pleat (19) which is formed from a first fold (20) and a second fold (21) in the first layer of fabric (7) and the second layer of fabric (8) is folded with at least one second elongate pleat (22) which is formed from a first fold (23) and a second fold (24) in the second layer of fabric (8) and the chamber (14) is at a first volume, wherein the first elongate pleat (19) extends from a first portion of the seam (25) to a second portion of the seam (25) across part of a width of the first layer of fabric (7) and divides the first layer of fabric (7) into a first area (29) and a second area (30), with the first area (29) being larger than the second area (30) and wherein the second elongate pleat (22) extends from the first portion of the seam (25) to the second portion of the seam (25) across part of a width of the second layer of fabric (8) and divides the second layer of fabric (8) into a third area (34) and a fourth area (35), with the third area (34) being larger than the fourth area (35); and
in the second configuration, each pleat (19, 22) in the first and second layers of fabric (7, 8) is unfolded to allow the chamber (14) to expand to a second volume, wherein the second volume is greater than the first volume, such that upon inflation of the air-bag (6) within a vehicle, the air-bag (6) transitions between the first configuration and the second configuration to at least partly fill a space adjacent to the torso of an occupant (1) of the vehicle.

2. The air-bag of claim 1, wherein when the air-bag (6) is in the first configuration, the first layer of fabric (7) is folded with a first plurality of elongate pleats that are spaced apart from one another and the second layer of fabric (8) is folded with a second plurality of elongate pleats that are spaced apart from one another.

3. The air-bag of claim 1 or claim 2, wherein the first layer of fabric (7) and the second layer of fabric (8) are symmetrical in shape about an axis; and
the first and second pleats (19, 22) are positioned symmetrically about the axis.

4. The air-bag any one of the preceding claims, wherein the chamber (14) comprises a first portion and a second portion, and wherein when the air-bag (6) is inflated and in the second configuration, the second portion has a greater width than the first portion.

5. The air-bag of any one of the preceding claims, wherein the air-bag (6) is configured to be mounted in a vehicle so that, when the air-bag (6) is inflated and in the second configuration, the air-bag (6) is positioned between the torso of the occupant (1) of the vehicle and a side of the vehicle.

6. The air-bag of any one of the preceding claims, wherein the air-bag (6) is configured to be mounted in a vehicle so that, as the air-bag (6) transitions from the first configuration to the second configuration, the inflating air-bag (6) is centrally positioned under an arm (4) of the occupant (1) of the vehicle.

7. The air-bag of any one of the preceding claims, wherein the air-bag (6) is configured to be mounted in a vehicle so that, upon inflation, the inflated air-bag (6) is positioned between two seats of the vehicle.

8. The air-bag of any one of the preceding claims, wherein the air-bag (6) is provided with a gas inlet aperture (17) and an insert coupled to the air-bag (6) adjacent to the gas inlet aperture (17), the insert being configured to be mounted to a gas generator.

9. A side air-bag module comprising:
an enclosure;
a gas generator; and
the air-bag (6) of claim 8, wherein the gas generator is mounted to the insert and the air-bag (6) is folded and received within the enclosure.

## Patentansprüche

1. Seitenairbag für ein Kraftfahrzeug, der Airbag umfassend:
eine erste Gewebeschicht (7); und
eine zweite Gewebeschicht (8), wobei die zweite Gewebeschicht (8) mit der ersten Gewebeschicht (7) überlagert ist, um eine Kammer (14) zwischen einem Teilstück (15) der ersten Gewebeschicht (7) und einem Teilstück (16) der zweiten Gewebeschicht (8) auszubilden, wobei die erste Gewebeschicht (7) und die zweite Gewebeschicht (8) miteinander einstückig ausgebildet und gefaltet sind, um die erste Gewebeschicht (7) mit der zweiten Gewebeschicht (8) zu überlagern, und wobei die erste Gewebeschicht (7) an die zweite Gewebeschicht (8) entlang eines Saums (25) genäht ist, der sich mindestens teilweise um den Umfang der ersten Gewebeschicht (7) und der zweiten Gewebeschicht (8) herum erstreckt, wobei der Airbag (6) konfiguriert ist, um bei einem Aufblasen des Airbags (6) zwischen einer ersten Konfiguration und einer zweiten Konfiguration zu wechseln, wobei:
in der ersten Konfiguration, die erste Gewebeschicht (7) mit mindestens einer ersten länglichen Bundfalte (19) gefaltet ist, die aus einer ersten Falte (20) und einer zweiten Falte (21) in der ersten Gewebeschicht (7) ausgebildet ist, und die zweite Gewebeschicht (8) mit mindestens einer zweiten länglichen Bundfalte (22) gefaltet ist, die aus einer ersten Falte (23) und einer zweiten Falte (24) in der zweiten Gewebeschicht (8) ausgebildet ist, und die Kammer (14) sich in einem ersten Volumen befindet, wobei sich die erste längliche Bundfalte (19) von einem ersten Abschnitt des Saums (25) zu einem zweiten Abschnitt des Saums (25) über einen Teil einer Breite der ersten Gewebeschicht (7) erstreckt und die erste Gewebeschicht (7) in einen ersten Bereich (29) und einen zweiten Bereich (30) unterteilt, wobei der erste Bereich (29) größer als der zweite Bereich (30) ist und wobei sich die zweite längliche Bundfalte (22) von dem ersten Abschnitt des Saums (25) zu dem zweiten Abschnitt des Saums (25) über einen Teil einer Breite der zweiten Gewebeschicht (8) erstreckt und die zweite Gewebeschicht (8) in einen dritten Bereich (34) und einen vierten Bereich (35) unterteilt, wobei der dritte Bereich (34) größer als der vierte Bereich (35) ist; und
in der zweiten Konfiguration, jede Bundfalte (19, 22) in der ersten und der zweiten Gewebeschicht (7, 8) entfaltet wird, um es der Kammer (14) zu ermöglichen, sich auf ein zweites Volumen auszudehnen, wobei das zweite Volumen derart größer als das erste Volumen ist, dass bei dem Aufblasen des Airbags (6) innerhalb eines Fahrzeugs, der Airbag (6) zwischen der ersten Konfiguration und der zweiten Konfiguration wechselt, um einen Raum, der an den Rumpf eines Insassen (1) des Fahrzeugs angrenzt, mindestens teilweise zu füllen.

2. Airbag nach Anspruch 1, wobei, wenn der Airbag (6) in der ersten Konfiguration ist, die erste Gewebeschicht (7) mit einer ersten Vielzahl von länglichen Bundfalten gefaltet ist, die voneinander beabstandet sind, und die zweite Gewebeschicht (8) mit einer zweiten Vielzahl von länglichen Bundfalten gefaltet ist, die voneinander beabstandet sind.

3. Airbag nach Anspruch 1 oder 2, wobei die erste Gewebeschicht (7) und die zweite Gewebeschicht (8) um eine Achse herum symmetrisch geformt sind; und
die erste und die zweite Bundfalte (19, 22) um die Achse herum symmetrisch positioniert sind.

4. Airbag nach einem der vorstehenden Ansprüche, wobei die Kammer (14) einen ersten Abschnitt und einen zweiten Abschnitt umfasst und wobei, wenn der Airbag (6) aufgeblasen und in der zweiten Konfiguration ist, der zweite Abschnitt eine größere Breite als der erste Abschnitt aufweist.

5. Airbag nach einem der vorstehenden Ansprüche, wobei der Airbag (6) konfiguriert ist, um in einem Fahrzeug montiert zu werden, sodass, wenn der Airbag (6) aufgeblasen und in der zweiten Konfiguration ist, der Airbag (6) zwischen dem Rumpf des Insassen (1) des Fahrzeugs und einer Seite des Fahrzeugs positioniert ist.

6. Airbag nach einem der vorstehenden Ansprüche, wobei der Airbag (6) konfiguriert ist, um in einem Fahrzeug montiert zu werden, sodass, während der Airbag (6) von der ersten Konfiguration in die zweite Konfiguration übergeht, der sich aufblasende Airbag (6) unter einem Arm (4) des Insassen (1) des Fahrzeugs zentral positioniert ist.

7. Airbag nach einem der vorstehenden Ansprüche, wobei der Airbag (6) konfiguriert ist, um in einem Fahrzeug montiert zu werden, sodass, bei dem Aufblasen, der aufgeblasene Airbag (6) zwischen zwei Sitzen des Fahrzeugs positioniert ist.

8. Airbag nach einem der vorstehenden Ansprüche, wobei der Airbag (6) mit einer Gaseinlassöffnung (17) und einem Einsatz versehen ist, der mit dem Airbag (6) angrenzend an die Gaseinlassöffnung (17) gekoppelt ist, wobei der Einsatz konfiguriert ist, um an einem Gasgenerator montiert zu werden.

9. Seitenairbagmodul, umfassend:
eine Umhüllung;
einen Gasgenerator; und
den Airbag (6) nach Anspruch 8, wobei der Gasgenerator an dem Einsatz montiert ist und der Airbag (6) gefaltet und innerhalb des Gehäuses aufgenommen ist.

## Revendications

1. Sac gonflable latéral pour un véhicule automobile, le sac gonflable comprenant :
une première couche de tissu (7) ; et
une seconde couche de tissu (8), la seconde couche de tissu (8) étant superposée à la première couche de tissu (7) pour former une chambre (14) entre une section (15) de la première couche de tissu (7) et une section (16) de la seconde couche de tissu (8), dans lequel la première couche de tissu (7) et la seconde couche de tissu (8) sont formées d'un seul tenant l'une avec l'autre et pliées pour superposer la première couche de tissu (7) à la seconde couche de tissu (8), et dans lequel la première couche de tissu (7) est cousue à la seconde couche de tissu (8) le long d'une couture (25) qui s'étend au moins partiellement autour de la périphérie de la première couche de tissu (7) et de la seconde couche de tissu (8), le sac gonflable (6) étant conçu pour passer d'une première configuration à une seconde configuration lors du gonflage du sac gonflable (6), dans lequel :
dans la première configuration, la première couche de tissu (7) est pliée avec au moins une première plissure allongée (19) qui est formée à partir d'un premier pli (20) et d'un second pli (21) dans la première couche de tissu (7), et la seconde couche de tissu (8) est pliée avec au moins une seconde plissure allongée (22) qui est formée à partir d'un premier pli (23) et d'un second pli (24) dans la seconde couche de tissu (8), et la chambre (14) présente un premier volume, dans lequel la première plissure allongée (19) s'étend d'une première portion de la couture (25) à une seconde portion de la couture (25) à travers une partie d'une largeur de la première couche de tissu (7) et divise la première couche de tissu (7) en une première zone (29) et une deuxième zone (30), la première zone (29) étant plus grande que la deuxième zone (30) et dans lequel la seconde plissure allongée (22) s'étend de la première portion de la couture (25) à la seconde portion de la couture (25) sur une partie d'une largeur de la seconde couche de tissu (8) et divise la seconde couche de tissu (8) en une troisième zone (34) et une quatrième zone (35), la troisième zone (34) étant plus grande que la quatrième zone (35) ; et
dans la seconde configuration, chaque plissure (19, 22) dans les première et seconde couches de tissu (7, 8) est dépliée pour permettre à la chambre (14) de se dilater en un second volume, dans lequel le second volume est supérieur au premier volume de telle sorte que, lors du gonflage du sac gonflable (6) à l'intérieur d'un véhicule, le sac gonflable (6) passe de la première configuration à la seconde configuration pour remplir au moins partiellement un espace adjacent au torse d'un occupant (1) du véhicule.

2. Sac gonflable selon la revendication 1, dans lequel, lorsque le sac gonflable (6) est dans la première configuration, la première couche de tissu (7) est pliée avec une première pluralité de plissures allongées qui sont espacées les unes des autres et la seconde couche de tissu (8) est pliée avec une seconde pluralité de plissures allongées qui sont espacées les unes des autres.

3. Sac gonflable selon la revendication 1 ou la revendication 2, dans lequel la première couche de tissu (7) et la seconde couche de tissu (8) ont une forme symétrique autour d'un axe ; et
les première et seconde plissures (19, 22) sont positionnées symétriquement autour de l'axe.

4. Sac gonflable selon l'une quelconque des revendications précédentes, dans lequel la chambre (14) comprend une première portion et une seconde portion, et dans lequel, lorsque le sac gonflable (6) est gonflé et dans la seconde configuration, la seconde portion a une largeur supérieure à celle de la première portion.

5. Sac gonflable selon l'une quelconque des revendications précédentes, dans lequel le sac gonflable (6) est conçu pour être monté dans un véhicule de sorte que, lorsque le sac gonflable (6) est gonflé et dans la seconde configuration, le sac gonflable (6) est positionné entre le torse de l'occupant (1) du véhicule et un côté du véhicule.

6. Sac gonflable selon l'une quelconque des revendications précédentes, dans lequel le sac gonflable (6) est conçu pour être monté dans un véhicule de sorte que, lorsque le sac gonflable (6) passe de la première configuration à la seconde configuration, le sac gonflable (6) qui se gonfle est positionné de manière centrale sous un bras (4) de l'occupant (1) du véhicule.

7. Sac gonflable selon l'une quelconque des revendications précédentes, dans lequel le sac gonflable (6) est conçu pour être monté dans un véhicule de sorte que, lors du gonflage, le sac gonflable (6) gonflé est positionné entre deux sièges du véhicule.

8. Sac gonflable selon l'une quelconque des revendications précédentes, dans lequel le sac gonflable (6) est pourvu d'une ouverture d'entrée de gaz (17) et d'un insert accouplé au sac gonflable (6) adjacent à l'ouverture d'entrée de gaz (17), l'insert étant conçu pour être monté sur un générateur de gaz.

9. Module de sac gonflable latéral comprenant :
une enveloppe ;
un générateur de gaz ; et
le sac gonflable (6) selon la revendication 8, dans lequel le générateur de gaz est monté sur l'insert et le sac gonflable (6) est plié et reçu à l'intérieur de l'enveloppe.
